(19) Europäisches Patentamt

European Patent Office

Office européen des brevets

(11) Numéro de publication: **0 089 893
B1**

(12) **FASCICULE DE BREVET EUROPEEN**

(45) Date de publication du fascicule du brevet:
**16.07.86**

(21) Numéro de dépôt: **83400577.9**

(22) Date de dépôt: **18.03.83**

(51) Int. Cl.⁴: **C 12 G 3/08**

(54) Procédé de fabrication et de traitement de boissons alcooliques et boissons alcooliques obtenues par la mise en oevre de ce procédé.

(30) Priorité: **24.03.82 FR 8205038**

(43) Date de publication de la demande:
**28.09.83 Bulletin 83/39**

(45) Mention de la délivrance du brevet:
**16.07.86 Bulletin 86/29**

(84) Etats contractants désignés:
**AT BE CH DE GB IT LI LU NL SE**

(56) Documents cités:
**DE - A - 2 339 206**
**GB - A - 1 177 126**

(73) Titulaire: **UNION DE BRASSERIES, 33, avenue de Wagram, F-75017 Paris (FR)**

(72) Inventeur: **Bonnome, Jean-Pierre, 29, boulevard Henri Ruel, F-94120 Fontenay Sous Bois (FR)**

(74) Mandataire: **Netter, André et al, Cabinet NETTER 40, rue Vignon, F-75009 Paris (FR)**

ACTORUM AG

## Déscription

L'invention a pour objet un procédé de fabrication et de traitement de boissons alcooliques et des boissons alcooliques obtenues par la mise en œuvre de ce procédé.

On connaît de très nombreuses boissons alcooliques obtenues par fermentation de divers jus sucrés, le degré d'alcool de la boisson finale étant dépendant de la teneur en sucre du jus initial.

Certaines boissons, comme le whisky et également le vin, sont consommées après addition d'une quantité d'eau variable au moment de la consommation.

Dans d'autres cas, comme celui de la bière, des considérations d'ordre hygiénique, ou autre, rendent souhaitable l'obtention d'une boisson à très faible degré d'alcool, mais conservant le goût de la bière habituelle.

On a proposé, dans ce but, d'appliquer l'osmose inverse ou hyperfiltration, et également l'ultrafiltration, pour fabriquer une bière à très faible degré d'alcool, et cela après avoir constaté que le concentrat laissé par l'osmose inverse ou l'ultrafiltration comprenait la plupart des composants qui sont à l'origine du goût de la bière. A un tel concentrat, on ajoute de l'eau, obtenant ainsi une bière très faiblement alcoolisée mais ayant conservé son goût de bière.

Un procédé analogue, appliqué à un vin, est décrit dans DE-A 2 339 206. Ce document propose en outre d'extraire du perméat, par distillation ou par osmose inverse, l'eau destinée à diluer le concentrat.

L'invention part d'une conception peut-on dire opposée. Elle est basée sur cette constatation qu'en réalité sont présents, dans le perméat résultant de l'osmose inverse ou de l'ultrafiltration, des produits à odeur de bière et aussi sur cette remarque qu'il existe des membranes semi-perméables qui, utilisées dans un procédé d'osmose inverse, ne se laissent traverser pratiquement que par l'eau. Elle est caractérisée par ce fait qu'on soumet le perméat résultant du premier traitement (osmose inverse ou ultrafiltration) à une osmose inverse utilisant une telle membrane, qui fournit ainsi un concentrat à fort degré alcoolique et contenant des produits à odeur de bière. L'adjonction de ce concentrat au concentrat résultant du premier traitement fournit une bière à plus fort degré d'alcool que la bière de départ et qui a conservé intégralement tous les produits donnant à la bière son goût et son odeur.

Cette bière concentrée peut être conservée et/ou transportée dans des conditions beaucoup plus économiques que la bière de départ.

Il suffit d'y ajouter de l'eau, en quantité convenable, pour soit reconstituer la bière initiale de manière intégrale, soit obtenir une bière plus forte en alcool que la bière initiale ou bien une bière moins forte en alcool que la bière initiale.

Le procédé selon l'invention peut s'appliquer en utilisant comme liquide de départ une bière à teneur normale en alcool, environ 5°. En ajoutant au concentrat obtenu par la première osmose inverse le concentrat résultant de la seconde osmose inverse, on aboutit à une bière concentrée à forte teneur en alcool, de l'ordre de 10°.

Comme exemple d'une membrane utilisable dans la seconde osmose inverse, on cite une membrane de nature composite, constituée d'un support en polysulfone ou corps analogue revêtu d'une couche active d'une composition chimique différente de celle du support, une telle membrane étant utilisée actuellement pour le dessalement poussé de l'eau de mer.

On peut faire varier le degré d'alcool du second concentrat par le choix de la membrane intervenant dans le second traitement d'osmose inverse.

L'invention prévoit, dans une phase de fonctionnement, de faire subir au mélange des deux concentrats un nouveau traitement, de sorte qu'on obtient, selon le réglage de l'installation, à la sortie de l'installation une «bière» à teneur d'alcool variant dans de larges limites, cette «bière» contenant tous les composants de la bière initiales et exclusivement ces composants, d'une part au bénéfice de son goût et aussi dans le respect strict des conditions imposées par les diverses législations.

Le procédé s'applique à des liquides alcooliques autres que la bière, notamment à un liquide obtenu par fermentation d'un moût à base de malt, mais sans adjonction de houblon, qu'on peut dénommer cervoise. On aboutit à une boisson qui, naturellement gazeuse, est comparable aux boissons résultant de l'adjonction d'eau gazeuse à du whisky habituel; la boisson finale obtenue peut avoir un degré d'alcool variable dans de larges limites, suivant le réglage de l'installation.

Pour l'obtention d'une boisson à degré d'alcool relativement élevé, l'invention prévoit un traitement final, en soi connu, pour ramener les concentrations anionique et cationique aux valeurs convenables.

Selon un mode d'exécution, le moût de départ, qui peut être analogue à celui prévu pour une bière normale, est traité par une enzyme, comme l'amylo-glucosidase qui transforme tous les sucres en sucres fermentescibles.

Par l'action de la levure, on aboutit donc à un liquide à degré alcoolique plus élevé que l'aurait été celui de la bière non traitée par l'enzyme obtenue à partir d'un tel moût. C'est ce liquide qui est soumis, comme expliqué ci-dessus, à l'ultrafiltration ou à l'hyperfiltration, laquelle est facilitée par l'absence de sucres, le prix de revient du traitement étant ainsi notablement plus faible.

Le procédé selon l'invention s'applique également pour le traitement du vin.

La première phase ou étape de traitement est alors avantageusement une ultrafiltration.

On obtient ainsi un vin concentré, ce qui permet le transport dans des conditions plus économiques.

L'addition d'eau au vin concentré permet de reconstituer le vin initial.

On peut aussi, suivant la quantité d'eau ajoutée, obtenir un vin plus étendu que le vin initial ou au contraire un vin à plus fort degré d'alcool.

Dans ce dernier cas, un traitement par un adoucisseur pour l'élimination d'une partie des cations et des anions est prévu.

D'une manière générale, le procédé selon l'invention s'applique aux divers liquides alcooliques obtenus par la fermentation de grains ou de fruits.

Il peut être répété plusieurs fois, le liquide résultant d'un premier traitement étant soumis à un traitement identique, etc. dans le cas où on souhaite aboutir à un liquide à plus fort degré alcoolique.

Le procédé peut s'appliquer avec une installation dans laquelle les liquides sont en flux continu, les appareils d'ultrafiltration ou de première osmose inverse et ceux de l'osmose inverse finale étant placés en séries parallèles.

Exemple 1

On part d'une bière normale à teneur alcoolique de 5° Gay-Lussac (G.-L.). On soumet ladite bière à une première osmose inverse en utilisant une membrane semi-perméable à base d'acétate de cellulose. La pression à l'amont de la membrane est de l'ordre de 50 bars. La température est de 20 °C environ.

On obtient:

a) un concentrat à teneur alcoolique d'environ 5°Gay-Lussac qui contient toutes les matières azotées génératrices de la mousse, les composants donnant l'amertume, les polyphénols et les sucres encore contenus dans la bière après fermentation. Ce concentrat représente, pour le réglage adopté, environ 40% en volume de la bière de départ;

b) un perméat constitué par un mélange d'eau et d'alcool, qui titre environ 5° Gay-Lussac et qui représente environ 60% en volume de la bière de départ.

On soumet ce perméat à une seconde osmose inverse, mais pour laquelle la membrane semi-perméable utilisée est une membrane dite composite, à support en polysulfone, à configuration en enroulement spirale et à flux croisés.

La température de traitement est d'environ 20 °C.

La pression à l'amont de ladite membrane est d'environ 50 bars.

Ce traitement élimine ainsi par le perméat une partie de l'eau à l'exclusion d'autres composants intéressants.

Le concentrat laissé par cette seconde osmose inverse contient non seulement de l'alcool éthylique, mais d'autres alcools de fermentation et des produits à odeur de bière. Ce concentrat représente environ 15% en volume de la bière initiale et titre environ 20° Gay-Lussac d'alcool. Il est ajouté au concentrat fourni par la première osmose inverse. On obtient une bière concentrée contenant tous les produits caractéristiques de la bière de départ, de titre alcoolique voisin de 10° Gay-Lussac, qui a ainsi un volume environ moitié moindre que celui de la bière initiale.

Cette bière concentrée se conserve mieux que la bière de départ: à la même température sa durée de conservation est plus longue, et/ou sa conservation peut avoir lieu à température moins basse que pour une bière normale.

Son transport est plus facile et plus économique que celui de la bière de départ.

En ajoutant à cette bière concentrée une quantité d'eau égale, on obtient une bière à 5° Gay-Lussac qui est strictement identique à la bière de départ.

Exemple 2

On procède comme dans l'exemple 1. Mais la première étape du traitement, à savoir la première osmose inverse, est remplacée par une ultrafiltration.

Exemple 3

On procède d'abord comme dans l'exemple 1. Mais la bière concentrée obtenue, dont la teneur en alcool est voisine de 10° Gay-Lussac, est soumise à un second traitement analogue à celui appliqué à la bière de départ: la bière concentrée subit une ultrafiltration, qui fournit un concentrat; le perméat est soumis à une osmose inverse avec une membrane à pores beaucoup plus petits, comme une membrane dite composite, dont le concentrat est ajouté à celui résultant de l'ultrafiltration. La bière très concentrée obtenue finalement à un degré alcoolique voisin de 13° Gay-Lussac.

Exemple 4

On fait fermenter un moût à très forte teneur en sucres fermentescibles obtenu à partir de malt (sans houblon), de telle manière qu'après fermentation la teneur en alcool du liquide ait une valeur de l'ordre de 7° Gay-Lussac.

On soumet le liquide à une ultrafiltration ou première osmose inverse. Dans ce dernier cas, la membrane semi-perméable utilisée est à base d'acétate de cellulose. La température est de l'ordre de 20 °C.

La pression est de l'ordre de 50 bars.

On obtient un concentrat représentant environ 40% en volume du liquide initial et un perméat représentant environ 60%.

Le concentrat a une teneur alcoolique d'environ 7° Gay-Lussac.

Le perméat a une teneur alcoolique d'environ 7°. Il est constitué par un mélange d'eau et d'alcool.

Ce perméat est soumis à une osmose inverse, en utilisant une membrane de nature composite, comme ci-dessus. Cette seconde osmose inverse se déroule à une température de 20 °C et à une pression de 50 bars. Elle fournit un concentrat dont la teneur en alcool est d'environ 20° Gay-Lussac.

Ce concentrat est ajouté au concentrat obtenu par la première phase du traitement. On aboutit à un liquide alcoolique dont le titre alcoolimétrique est de l'ordre de 11 °5.

Si on désire accroître le degré alcoolique, ce liquide est soumis à un second cycle analogue à celui du premier traitement, et ainsi de suite.

Le nombre de traitement et/ou le type de membrane de la ou des secondes osmoses inverses peuvent être choisis pour que le titre alcoolique de la boisson finale soit au moins égal à 16° Gay-Lussac.

Si le liquide doit être consommé sans adjonction d'eau, ou avec une faible adjonction d'eau, il est soumis auparavant à un traitement de désanionisation et de décationisation par passage sur une cartouche connue.

Exemple 5

On procède comme dans les exemples 3 et 4. L'installation comprend un seul étage constitué par un premier appareil d'osmose inverse à membrane à base d'acétate de cellulose (ou un appareil d'ultrafiltration) suivi par un appareil d'osmose inverse à membrane à support en polysulfone. Le concentrat sortant du second appareil est réintroduit, par une pompe de gavage, à l'entrée du premier appareil et il subit un nouveau cycle de traitement, etc.

De bons résultats ont été obtenus en alimentant le premier appareil en liquide initial pour 40% en volume et pour 60% en liquide provenant de la pompe de gavage, 40% du liquide sortant du second appareil étant acheminé par un circuit de fuite vers la sortie de l'installation.

Ce recyclage peut être appliqué aux autres exemples.

**Revendications**

1. Procédé pour le traitement d'un liquide alcoolique provenant de la fermentation d'un moût, dans lequel ledit liquide est soumis à une première étape de traitement consistant en une ultrafiltration ou une osmose inverse fournissant un concentrat et un perméat, caractérisé en ce que ledit perméat est soumis à une osmose inverse utilisant une membrane substantiellement imperméable à l'alcool et ne se laissant traverser pratiquement que par l'eau et en ce que le concentrat obtenu par cette seconde étape de traitement est ajouté au concentrat obtenu par la première étape de traitement, fournissant un liquide à degré alcoolique plus élevé que le liquide de départ.

2. Procédé selon la revendication 1, caractérisé en ce que l'osmose inverse de la seconde étape de traitement est conduite en utilisant une membrane semi-perméable du type composite à support de polysulfone.

3. Procédé selon la revendication 1 ou 2, caractérisé en ce que le liquide de départ est de la bière.

4. Bière concentrée obtenue par la mise en œuvre du procédé selon la revendication 3.

5. Bière obtenue en ajoutant de l'eau à la bière concentrée suivant la revendication 4.

6. Boisson obtenue en éliminant de la bière concentrée selon la revendication 4, des éléments cationiques et anioniques en excès.

7. Procédé selon l'une des revendications 1 à 3, caractérisé en ce qu'après avoir été exécuté, il est exécuté à nouveau en partant du liquide à degré alcoolique plus élevé.

8. Liquide alcoolique obtenu par la mise en œuvre du procédé selon la revendication 7.

9. Boisson obtenue en éliminant du liquide alcoolique selon la revendication 8, des éléments cationiques et anioniques en excès.

10. Procédé pour le stockage et/ou le transport de bière consistant à soumettre une bière normale à une première osmose inverse avec membrane à base d'acétate de cellulose ou analogue ou à une ultrafiltration, à soumettre le perméat ainsi obtenu à une seconde osmose inverse, mais à membrane à support de polysulfone, à ajouter le concentrat fourni par la seconde osmose inverse au concentrat fourni par la première osmose inverse (ou l'ultrafiltration), le mélange étant stocké et/ou transporté.

11. Procédé pour la fabrication d'un liquide alcoolique, caractérisé en ce qu'on part d'un moût à forte teneur en sucres fermentescibles, en ce qu'on fait fermenter le moût, en ce que le liquide alcoolique résultant de la fermentation est soumis à une ultrafiltration, en ce que le perméat provenant de cette ultrafiltration est soumis à une osmose inverse avec une membrane laissant passer substantiellement seulement l'eau et en ce qu'on ajoute le concentrat obtenu par cette osmose inverse au concentrat obtenu par l'ultrafiltration.

12. Procédé selon la revendication 11, caractérisé en ce que l'ultrafiltration est remplacée par une osmose inverse à l'aide d'une membrane se laissant traverser par l'eau et l'alcool mais non en principe par les produits caractéristiques du goût et de l'odeur du liquide.

13. Procédé selon la revendication 11 ou 12, caractérisé en ce qu'avant la fermentation on ajoute au moût initial une enzyme rendant les sucres fermentescibles comme de l'amylo-glucosidase.

14. Liquide alcoolique obtenu par la mise en œuvre du procédé selon l'une des revendications 11 à 13.

15. Procédé selon l'une des revendications 11 à 13, caractérisé en ce que le liquide alcoolique obtenu par le mélange des deux concentrats est soumis à un procédé de traitement analogue à celui qui a permis de l'obtenir.

16. Procédé selon la revendication 15, caractérisé en ce que le dernier procédé est exécuté dans la même installation que le premier.

17. Boisson constituée par le liquide alcoolique provenant de la mise en œuvre du procédé selon l'une des revendications 15 ou 16.

18. Boisson selon la revendication 17, caractérisée en ce qu'elle a été soumise à une opération de désanionisation et de décationisation.

**Patentansprüche**

1. Verfahren zur Behandlung einer von der Fermentierung einer Würze stammenden, alkoholischen Flüssigkeit, bei dem die Flüssigkeit einer ersten Behandlungsstufe ausgesetzt wird, die in einer Ultrafiltrierung oder einer Umkehrosmose besteht, wobei ein Konzentrat und ein Permeat erhalten werden, dadurch gekennzeichnet, dass das Permeat einer Umkehrosmose ausgesetzt wird, wobei eine im wesentlichen für Alkohol undurchlässige und praktisch nur Wasser hindurchlassende Membrane verwendet wird, und dass das bei dieser zweiten Behandlungsstufe erhaltene Konzentrat dem bei der ersten Behandlungsstufe erhaltenen Konzentrat hinzugefügt wird, wodurch sich eine Flüssigkeit mit einem Alkoholgehalt ergibt, der höher als derjenige der Ausgangsflüssigkeit ist.

2. Verfahren nach Anspruch 1, dadurch gekennzeichnet, dass die Umkehrosmose bei der zweiten Behandlungsstufe durchgeführt wird, indem eine halbdurchlässige Membrane vom zusammengesetzten Typ mit einem Polysulfonträger verwendet wird.

3. Verfahren nach Anspruch 1 oder 2, dadurch gekennzeichnet, dass die Ausgangsflüssigkeit Bier ist.

4. Konzentriertes Bier, welches mittels Durchführung des Verfahrens nach Anspruch 3 erhalten worden ist.

5. Bier, welches durch Hinzufügen von Wasser zu dem konzentrierten Bier gemäss Anspruch 4 erhalten worden ist.

6. Bier, welches dadurch erhalten worden ist, dass von dem konzentrierten Bier gemäss Anspruch 4 die überschüssigen Kationen und Anionen entfernt worden sind.

7. Verfahren nach einem der Ansprüche 1 bis 3, dadurch gekennzeichnet, dass es nach seiner Durchführung erneut durchgeführt wird, wobei von der Flüssigkeit mit höherem Alkoholgehalt ausgegangen wird.

8. Alkoholische Flüssigkeit, die durch Durchführen des Verfahrens nach Anspruch 7 erhalten worden ist.

9. Getränk, welches dadurch erhalten worden ist, dass von der alkoholischen Flüssigkeit gemäss Anspruch 8 die überschüssigen Kationen und Anionen entfernt worden sind.

10. Verfahren zur Lagerung und/oder zum Transport von Bier, wobei ein normales Bier einer ersten Umkehrosmose mit einer Membrane auf Zelluloseacetatbasis oder analogem oder einer Ultrafiltrierung ausgesetzt wird, das derart erhaltene Permeat einer zweiten Umkehrosmose jedoch mit einer Membrane mit Polysulfonträger ausgesetzt wird, das sich durch die zweite Umkehrosmose ergebende Konzentrat dem sich aus der ersten Umkehrosmose (oder der Ultrafiltrierung) ergebenen Konzentrat hinzugefügt wird, und die Mischung gelagert und/oder transportiert wird.

11. Verfahren zur Herstellung einer alkoholischen Flüssigkeit, dadurch gekennzeichnet, dass man von einem Most mit einem starken Gehalt an vergärbaren Zuckern ausgeht, dass man den Most fermentieren lässt, dass die sich aus der Fermentierung ergebende alkoholische Flüssigkeit einer Ultrafiltrierung ausgesetzt wird, dass das sich bei dieser Ultrafiltrierung ergebende Permeat einer Umkehrosmose mit einer Membrane ausgesetzt wird, die im wesentlichen nur Wasser hindurchlässt, und dass man das durch diese Umkehrosmose erhaltene Konzentrat dem durch die Ultrafiltrierung erhaltenen Konzentrat hinzufügt.

12. Verfahren nach Anspruch 11, dadurch gekennzeichnet, dass die Ultrafiltrierung durch eine Umkehrosmose mit Hilfe einer Membrane ersetzt wird, die Wasser und Alkohol hindurchgehen lässt, aber grundsätzlich keine charakteristischen Geschmacks- und Geruchsstoffe der Flüssigkeit.

13. Verfahren nach Anspruch 11 oder 12, dadurch gekennzeichnet, dass man vor der Fermentierung dem Ausgangsmost ein Enzym wie Amylo-Glucosidase hinzufügt, welches die Zucker vergärbar macht.

14. Alkoholische Flüssigkeit, die durch Durchführung des Verfahrens nach einem der Ansprüche 11 bis 13 erhalten worden ist.

15. Verfahren nach einem der Ansprüche 11 bis 13, dadurch gekennzeichnet, dass die durch die Mischung der zwei Konzentrate erhaltene, alkoholische Flüssigkeit einem Behandlungsverfahren ausgesetzt wird, welches zu demjenigen analog ist, mit dem die Flüssigkeit erhalten werden konnte.

16. Verfahren nach Anspruch 15, dadurch gekennzeichnet, dass das letzte Verfahren in der gleichen Einrichtung wie das erste durchgeführt wird.

17. Getränk, welches von alkoholischer Flüssigkeit gebildet ist, die durch die Durchführung des Verfahrens nach Anspruch 15 oder 16 erhalten worden ist.

18. Getränk nach Anspruch 17, dadurch gekennzeichnet, dass es einem Entanionisierungs- und Entkationisierungsvorgang ausgesetzt worden ist.

**Claims**

1. A method of processing an alcoholic liquid which has been obtained by fermenting a must or a wort, wherein said alcoholic starting liquid is subjected to a first processing step consisting in ultrafiltration or reverse osmosis giving a concentrate and a permeate, characterized in that the said permeate is subjected to reverse osmosis using a membrane which is substantially impermeable to alcohol allowing practically only water to pass, and in that the concentrate from said second processing step is added to the concentrate obtained from said first processing step to provide a liquid having a higher degree of alcohol than the starting liquid.

2. A method according to claim 1, characterized in that the reverse osmosis of the second processing step is performed using a composite type semi-permeable membrane having a polysulphone support.

3. A method according to claim 1 or 2, characterized in that said starting liquid is beer.

4. A concentrated beer obtained by performing the method of claim 3.

5. A beer obtained by diluting the concentrated beer of claim 4 with water.

6. A beverage obtained by eliminating excess cations and anions from the concentrated beer of claim 4.

**0 089 893**

7. A method according to any one of claims 1 to 3, characterized in that the method is repeated a second time starting from the liquid of increased alcohol content.

8. An alcoholic liquid obtained by performing the method of claim 7.

9. A beverage obtained by eliminating excess cations and anions from the alcoholic liquid of claim 8.

10. A method of storing and/or transporting beer, the method comprising: subjecting a conventional beer to ultrafiltration or to a first reverse osmosis using a membrane based on cellulose acetate or the like; subjecting the resulting permeate to a second reverse osmosis using a polysulphone supported membrane; and adding the concentrate provided by the second reverse osmosis to the concentrate provided by the first reverse osmosis (or ultrafiltration), the resulting mixture being stored and/or transported.

11. A method of manufacturing an alcoholic liquid, characterized in that it starts from a must or a wort having a high degree of fermentable sugars; in that said must or wort is fermented; in that the resulting alcoholic liquid is subjected to ultrafiltration; in that the permeate from said ultrafiltration is subjected to reverse osmosis using a membrane that passes substantially only water; and in that the concentrate obtained from the reverse osmosis is added to the concentrate obtained from the ultrafiltration.

12. A method according to claim 11, characterized in that the ultrafiltration is replaced by a reverse osmosis using a membrane that passes both water and alcohol but which retains the bulk of products that determine the taste and the odour of the liquid.

13. A method according to claim 11 or 12, characterized in that an enzyme for making sugars fermentible, such as amylo-glucosidase is added to the initial must or wort before fermentation.

14. An alcoholic liquid obtained by performing the method according to any one of claims 11 to 13.

15. A method according to any one of claims 11 to 13, characterized in that the alcoholic liquid obtained by mixing the two concentrates is subjected to a process similar to the one from which it was obtained.

16. A method according to claim 15, characterized in that the second process is performed on the same installation as the first.

17. A beverage constituted by an alcoholic liquid obtained by performing the method according to claim 15 or 16.

18. A beverage according to claim 17, characterized in that the beverage is subjected to an operation of removing anions and cations.